# EUROPÄISCHE PATENTSCHRIFT

(11) **EP 2 619 054 B1**
(45) Veröffentlichungstag und Bekanntmachung des Hinweises auf die Patenterteilung: **24.05.2017**
(21) Anmeldenummer: 11763881.7
(22) Anmeldetag: 12.09.2011
(51) Int. Cl.: B60T 7/12

(54) **PNEUMATISCHE STEUERVENTILANORDNUNG ZUR REGELUNG DES BREMSZYLINDERDRUCKS EINER SELBSTTÄTIGEN INDIREKTEN DRUCKLUFTBREMSE**
PNEUMATIC CONTROL VALVE ASSEMBLY FOR REGULATING THE BRAKE CYLINDER PRESSURE OF AN AUTOMATIC INDIRECT COMPRESSED-AIR BRAKE
ENSEMBLE SOUPAPE DE COMMANDE PNEUMATIQUE SERVANT À RÉGULER LA PRESSION DE CYLINDRE DE FREIN D'UN FREIN À AIR COMPRIMÉ INDIRECT AUTOMATIQUE

(30) Priorität: 20.09.2010 EA 201001383
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); PETTER, Thomas, 80336 München (DE)
(74) Vertreter: Schönmann, Kurt
(86) Internationale Anmeldenummer: PCT/EP2011/065720
(87) Internationale Veröffentlichungsnummer: WO 2012/038282

(56) Entgegenhaltungen:
- EP-A1- 0 017 260
- EP-A1- 0 022 899
- EP-A1- 0 050 278
- DE-A1- 2 635 425
- DE-A1- 2 849 688
- DE-A1- 2 852 154
- DE-A1- 19 728 154
- DE-A1- 19 835 635
- DE-A1-102008 032 710
- DE-C- 969 085

## Beschreibung

Die Erfindung betrifft eine pneumatische Steuerventilanordnung zur Regelung des Bremszylinderdrucks einer selbsttätigen indirekten Druckluftbremse nach Maßgabe einer Druckdifferenz zwischen einem Steuerdruck und einem entgegensetzt auf einen Steuerkolben wirkenden Referenzdruck, wobei Mittel für eine Abschlussventilfunktion für die Beschleunigungseinrichtung der Druckluftbremse vorgesehen sind, die zur Beendigung der initialen Beschleunigung die Entlüftung eines KDR-Kanals stoppt.

Das Einsatzgebiet der Erfindung erstreckt sich auf den Schienenfahrzeugbau. Im Rahmen pneumatischer Bremsanlagen kommen gewöhnlich pneumatisch vorgesteuerte Steuerventile als Stellglieder zum Einsatz. Ein solches Stellglied steuert die Füllung der Hilfsluftbehälter oder Vorratsluftbehälter und bildet nach Maßgabe des Drucks in der Hauptluftleitung eines Schienenfahrzeuges einen entsprechenden Bremszylinder- oder Vorsteuerdruck aus. Ein Steuerventil für pneumatische Bremsanlagen wird je nach Einsatzzweck gewöhnlich kombiniert mit Höchstdruckbegrenzern, Füllstoffschutz, Beschleunigungseinrichtungen und dergleichen. Für eine Beschleunigungseinrichtung, die vornehmlich für eine gleichmäßige Bremsung eines aus vielen aneinandergekoppelten Schienenfahrzeugen bestehenden Zugverbandes dient, ist eine sogenannte Abschlussventilfunktion erforderlich, um die initiale Beschleunigung durch Schließen eines jeden Steuerventils zugeordneten KDR-Kanals zu beenden. Im Rahmen der vorliegenden Erfindung kann unter einer solchen Entlüftung sowohl eine echte Entlüftung an die Atmosphäre als auch ein Druckablass in Richtung Bremszylinderdruck verstanden werden.

Aus dem Fachbuch Asadtschenko, V.R.: Avtomatitscheskije Tormosa podvishnogo sostawa sheleznogo transporta (russ.), Moskau 2002, Seite 71 ff geht das allgemeine Prinzip eines Steuerventils hervor. Das Steuerventil besteht aus einem Hauptteil und einem Leitungsteil mit Beschleunigungsventil, die gewöhnlich an einem Ventilträger angebracht sind. Die notwendigen Druckluftverbindungen werden mit den betreffenden Anschlüssen am Ventilträger hergestellt. Innerhalb des Trägers befinden sich Kammern für den Steuerdruck S und den Referenzdruck A. Wesentliche Bestandteile des Hauptteils des Steuerventils sind der Steuerkolben, die auf diesen wirkende Druckfeder, ein integriertes Doppelsitzventil zum Beoder Entlüften des angeschlossenen Bremszylinders sowie ein Ausgleichskolben, der vom Bremszylinderdruck gegen die Kraft zweier einstellbarer Druckfedern bewegt wird.
Der Leitungsteil hat unter anderem die Aufgabe eine Druckluftverbindung von der Hauptluftleitung in einen KDR-Kanal für die zusätzliche Entlüftung des Steuerventils zu schaffen. Diese wird geöffnet, wenn der Druck in der Hauptluftleitung sinkt, damit die Senkung des Druckes auf der Länge des Zuges dezentral unterstützt wird. Der KDR-Kanal mündet in das Hauptteil des Steuerventils. Das Hauptteil hat somit die Aufgabe, den Kanal bei Beginn der Bremsung offenzuhalten und ihn nach ausreichender Wirkung des zusätzlichen Luftauslasses zu schließen.

Während der Bremsung wird zur Beendigung der initialen Beschleunigung die Entlüftung des KDR-Kanals gestoppt, indem innerhalb der Steuerventilanordnung eine Abschlussventilfunktion ausgebildet ist. Diese Abschlussventilfunktion wird beim Stand der Technik durch innerhalb des Steuerventils integrierte Ventilmittel umgesetzt, die nach Art eines Schieberventils funktionieren. Dies verlangt eine bestimmte Anordnung der Kolben des Steuerventils um entsprechend der Schieberventilfunktion ein hubabhängiges Schalten zu realisieren. Hierdurch entsteht ein wegabhängiges relativ großhubiges Hauptorgan. Dieses Ventilkonzept ist aus ventiltechnischen Gründen nicht verwendbar im Zusammenhang mit einem Dreidruckventil als Steuerventil zur Regelung des Bremszylinderdrucks.

Es ist die Aufgabe der vorliegenden Erfindung eine Abschlussventilfunktion für eine Beschleunigungseinrichtung zu schaffen, die einen von der Bauweise des Steuerventils unabhängigen Abschluss des KDR-Kanals ermöglicht, um beispielsweise ein Einsatz im Zusammenhang mit einem Dreidruckventil zu realisieren.

Die Aufgabe wird ausgehend von einer pneumatischen Steuerventilanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Mittel für die Abschlussventilfunktion in Form eines separaten Abschlussventils derart ausgeführt sind, dass ein innerhalb eines Abschlussventilgehäuses untergebrachter und von dem Steuerdruck S einerseits sowie den Referenzdruck A andererseits betätigter Abschlussventilsteuerkolben vorgesehen ist, der im Zusammenwirken mit mindestens einer Rückstellfeder über eine Kolbenstange eine Sitzventilanordnung zum Verschließen des KDR-Kanals gegenüber eines Entlüftungsanschlusses oder eines Bremszylinderdruckanschlusses betätigt, die einen Ventilsitz mit einem zugeordneten und endseitig der Kolbenstange angeordneten Verschlusskörper umfasst.

Der Vorteil der erfindungsgemäßen Lösung liegt insbesondere darin, dass von dem Ventilschieberprinzip abgegangen wird und die Abschlussventilfunktion durch Nutzung des Sitzventilprinzips umgesetzt wird. Ein Sitzventil vermag weitaus größere Durchflüsse mit geringem Schalthub zu realisieren. Durch Separation der Abschlussventilfunktion in ein eigenes Ventilgehäuse kann der Abschluss der genannten Luftkanäle unabhängig von der Bauweise des eigentlichen Steuerventils realisiert werden. Außerdem erlaubt das erfindungsgemäße Abschlussventil die Verwendung von Membrankolben am H-Teil des Steuerventils. Durch die erfindungsgemäße Ausgliederung der Abschlussventilfunktion ergibt sich die Möglichkeit einer Verwendung in Verbindung mit einem Dreidruckventil. Das erfindungsgemäße Abschlussventil ist direkt von der Druckdifferenz zwischen Referenzdruck und Steuerdruck schaltbar.Ferner ist das separate Abschlussventil mit Überströmungsschließmitteln für eine Verbindung zwischen der den Steuerdruck enthaltenden Steuerkammer und der den Referenzdruck enthaltenden Referenzdruckkammer ausgestattet. In vorteilhafter Weise ergibt sich hierdurch ein kombiniertes Abschlussventil für die Bremsbeschleunigungseinrichtung und die Verbindung zwischen Hauptluftleitung und Steuerkammer des Steuerventils einer Druckluftbremse. Vorzugsweise umfassen diese Überströmungsschließmittel des Abschlussventils eine zwischen der Steuerdruckkammer und der Referenzdruckkammer in der Kolbenstange und mit dieser verschiebbaren Kolbenstangenüberströmkanal zwischen der Referenzdruckkammer und einer benachbarten Überströmkammer. Um die Verbindung mit der Steuerdruckkammer herzustellen ist ein Ventilgehäuseüberströmkanal vorgesehen, der die Verbindung zwischen der Überströmkammer zur Steuerdruckkammer herstellt. Die seitens des Ventilgehäuses und der Kolbenstange angeordneten Überströmkanäle lassen sich fertigungstechnisch auf einfache Weise herstellen.

Zum Schließen des Kolbenstangenüberströmkanals wird gemäß einer weiteren die Erfindung verbessernden Maßnahme vorgeschlagen, dass die Überströmkammer gegenüber der Kolbenstange mit einer ersten dynamischen Dichtung seitens der angrenzenden Referenzdruckkammer sowie mit einer zweiten dynamischen Dichtung seitens einer andererseits angrenzenden Entlüftungskammer versehen ist. Entlang des Hubwegs der Kolbenstange passiert die sitzventilanordnungseitige Öffnung des Kolbenstangenüberströmkanals die erste dynamische Dichtung, wodurch sich die Druckverbindung zwischen Referenzdruck und Steuerdruck hubabhängig nach Art eines Schieberventils herstellen bzw. trennen lässt.

Gemäß einer anderen die Erfindung verbessernden Maßnahme ist das Abschlussventil so konstruiert, dass sich die Schließreihenfolge zwischen Abschlussventilfunktion und Überströmungsschließfunktion zwischen Steuerdruck und Referenzdruck festlegen lässt, um eine hohe Regelgüte zu erzielen. In diesem Sinne wird vorgeschlagen, dass der Kolbenstangenüberströmkanal unter Berücksichtigung des Hubwegs des Steuerkolbens und der Lage der ventilgehäuseseitigen - vorstehend beschriebenen - Druckkammern derart in der Kolbenstange ausgebildet ist, dass während der Bremsung bei entsprechend absinkendem Steuerdruck zuerst die Überströmverbindung zwischen der Steuerdruckkammer und der Referenzdruckkammer schließt, ehe die Verbindung zwischen dem KDR-Kanal und dem Entlüftungsanschluss schließt.

Um ein der Regelgüte zuträgliches Nachlaufen des Referenzdrucks gegenüber dem beim Druckausgleich voreilenden Steuerdruck während der Druckabsenkung zu erzielen, bildet vorzugsweise der Kolbenstangenüberströmkanal eine Drosselstelle im Überströmweg. Die Drosselstelle kann im einfachsten Fall als Blende über eine entsprechende Wahl des Bohrungsdurchmessers für den Kolbenstangenüberströmkanal ausgebildet werden.

Das erfindungsgemäße Abschlussventil bildet eine vorteilhafte konstruktive Voraussetzung zur Variation der Betriebsparameter. So wird vorgeschlagen, dass die zum Schließen der Abschlussventilanordnung sowie der Überströmungsschließmittel erforderliche Druckdifferenz zwischen Referenzdruck und Steuerdruck durch die Kolbenfläche des Abschlussventilsteuerkolbens sowie der Vorspannung und Federrate der Ventilfeder und der entgegengesetzt hierzu wirkenden Vorspannung und Federrate der Rückstellfeder festgelegt wird. Im einfachsten Falle lässt sich eine Einstellung durch eine Federauswahl herbeiführen. Weitere, die Erfindung verbessernde Maßnahmen sind in den abhängigen Ansprüchen angegeben oder werden nachstehend gemeinsam mit der Beschreibung eines bevorzugten Ausführungsbeispiels der Erfindung anhand der Figuren näher dargestellt. Es zeigt:
- Figur 1: eine schematische Seitenansicht eines kombinierten Abschlussventils in Fahrtstellung des Schienenfahrzeuges,
- Figur 2: eine schematische Seitenansicht eines kombinierten Abschlussventils in einer ersten Bremsphase des Schienenfahrzeuges, und
- Figur 3: eine schematische Seitenansicht eines kombinierten Abschlussventils in einer zweiten Bremsphase des Schienenfahrzeuges.

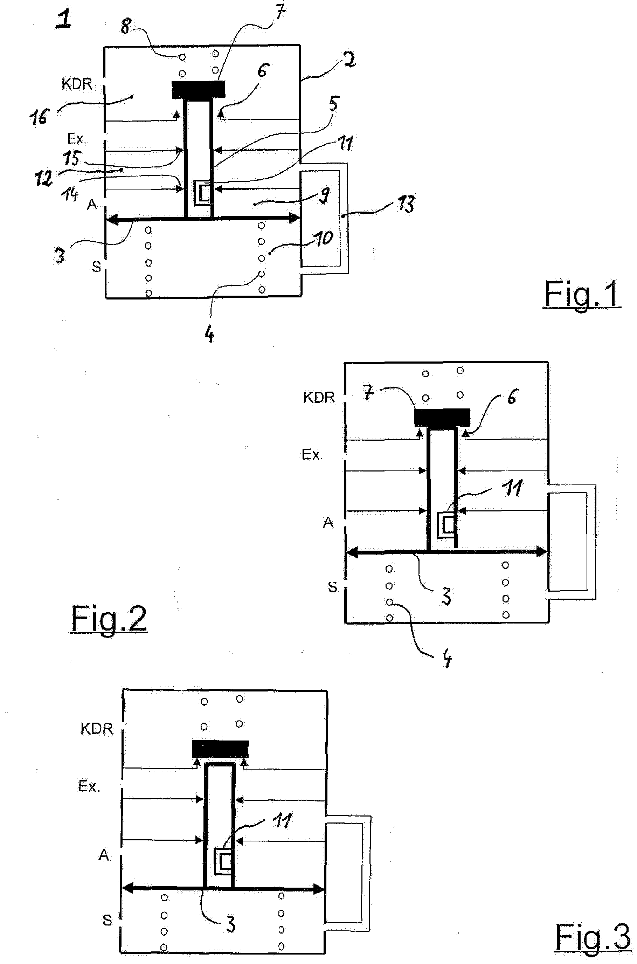

Gemäß Figur 1 besteht das kombinierte Abschlussventil 1 im Wesentlichen aus einem in einem Abschlussventilgehäuse 2 untergebrachten Abschlussventilsteuerkolben 3, der einerseits von einem Steuerdruck S sowie andererseits von einem Referenzdruck A beaufschlagt wird. Im Zusammenwirken mit einer Rückstellfeder 4 wird über eine Kolbenstange 5 eine Sitzventilanordnung zum Verschließen eines KDR-Kanals KDR gegenüber einem Entlüftungsanschluss Ex betätigt. Die Sitzventilanordnung besteht im Wesentlichen aus einem ortsfest zum Abschlussventilgehäuse 2 angeordneten Ventilsitz 6 mit einem zugeordneten und endseitig der Kolbenstange 5 angeordneten Verschlusskörper 7. Außerdem ist zwischen dem Abschlussventilgehäuse 2 und dem Verschlusskörper 7 eine Ventilfeder 8 angeordnet, welche in Schließrichtung der Sitzventilanordnung wirkt. Weiterhin sind als Überströmungsschließmittel zwischen der Steuerkammer 10 und der Referenzkammer 9 ein in der Kolbenstange 5 und mit dieser verschiebbarer Kolbenstangenüberströmkanal 11 zwischen der Referenzkammer 9 und einer in Richtung Sitzventilanordnung benachbart hierzu angeordnete Überströmkammer 12 vorgesehen, wobei nachfolgend ein Ventilgehäuseüberströmkanal 13, der im Ventilgehäuse 2 ausgebildet ist, eine Verbindung zwischen dieser Überströmkammer 12 und der Steuerdruckkammer 10 herstellt. Zur dynamischen Abdichtung der ventilinternen Kammern ist die Überströmkammer 12 gegenüber der Kolbenstange 5 mit einer ersten dynamischen Dichtung 14 seitens der angrenzenden Referenzdruckkammer 9 versehen. Eine zweite dynamische Dichtung 15 ist seitens der andererseits angrenzenden Entlüftungskammer 16 angeordnet. Beide Dichtungen 14 und 15 sind als Radiallippendichtringe ausgeführt.

In dem hier dargestellten Ausgangszustand, welcher der Fahrtstellung des Steuerventils entspricht, herrscht Druckausgleich zwischen dem Steuerdruck S und dem Referenzdruck A über den Kolbenstangenüberströmkanal 11 sowie den Ventilgehäuseüberströmkanal 13. Die Verbindungen KDR zum Entlüftungsanschluss Ex werden durch die Rückstellfeder 4 offengehalten.

Nach Fig.2 wird während einer Bremsung der Steuerdruck S abgesenkt. Da der Referenzdruck über den eine Drosselstelle bildenden Kolbenstangenüberströmkanal 11 nicht in ausreichendem Maße folgen kann, bildet sich eine Druckdifferenz am Abschlussventilsteuerkolben 3. Und veranlasst diese samt Kolbenstange 5 und Verschlusskörper 7 entgegen der Kraft der Rückstellfeder 4 in Richtung Steuerdruckkammer 10 zu fahren. Bei einem bestimmten Hub, der durch die Druckdifferenz am Abschlussventilsteuerkolben 3 und der mit dem Hub ansteigenden Kraft der Rückstellfeder 4 definiert ist, überfährt der Kolbenstangenüberströmkanal 11 die erste dynamische Dichtung 14. Damit ist die Verbindung zwischen Referenzdruck A und Steuerdruck S unterbrochen und der Referenzdruck ist fortan eingesperrt.

Gemäß Fig.3 bewegt sich bei steigender Druckdifferenz zwischen Referenzdruck und Steuerdruck am Ausgleichsventilsteuerkolben 3 dieser weiter gegen die steigende Federkraft der Rückstellfeder 4. Ab einem bestimmten Hub kommt der Verschlusskörper 7 auf dem Ventilsitz 6 zur Anlage und verschließt damit die Verbindung zwischen KDR und Ex. Da nun alle Verbindungen geschlossen sind, hat das kombinierte Abschlussventil seine Abschlussstellung erreicht.

### Bezugszeichenliste

- 1: Abschlussventil
- 2: Abschlussventilgehäuse
- 3: Abschlussventilsteuerkolben
- 4: Rückstellfeder
- 5: Kolbenstange
- 6: Ventilsitz
- 7: Verschlusskörper
- 8: Ventilfeder
- 9: Referenzdruckkammer
- 10: Steuerdruckkammer
- 11: Kolbenstangenüberströmkanal
- 12: Überströmkammer
- 13: Ventilgehäuseüberströmkanal
- 14: erste dynamische Dichtung
- 15: zweite dynamische Dichtung

## Patentansprüche

1. Pneumatische Steuerventilanordnung zur Regelung des Bremszylinderdrucks einer selbsttätigen indirekten Druckluftbremse nach Maßgabe einer Druckdifferenz zwischen einem Steuerdruck (S) und einem entgegengesetzt auf einen Steuerkolben wirkenden Referenzdruck (A), wobei Mittel für eine Abschlussventilfunktion für die Beschleunigungseinrichtung der Druckluftbremse vorgesehen sind, die zur Beendigung der initialen Beschleunigung die Entlüftung eines für eine zusätzliche Entlüftung vorgesehenen KDR-Kanals (KDR) stoppen, **dadurch gekennzeichnet, dass** die Mittel für die Abschlussventilfunktion in Form eines separaten Abschlussventils (1) mit einem Abschlussventilgehäuse (2) ausgeführt sind, wobei das separate Abschlussventil (1) zwei Überströmkanäle (11) und (13) umfasst, um eine Verbindung zwischen einer den Steuerdruck (S) enthaltenden Steuerdruckkammer (10) und einer den Referenzdruck (A) enthaltenden Referenzdruckkammer (9) zu realisieren, wobei innerhalb des Abschlussventilgehäuses (2) ein mit mindestens einer Rückstellfeder (4) zusammenwirkender Abschlussventilsteuerkolben (3) angeordnet ist, der von dem Steuerdruck (S) einerseits sowie von dem Referenzdruck (A) andererseits betätigbar ist und über eine Kolbenstange (5) eine Sitzventilanordnung zum Verschließen des KDR-Kanals (KDR) gegenüber einem Entlüftungsanschluss (Ex) oder einem Bremszylinderdruckanschluss betätigt, wobei die Sitzventilanordnung einen Ventilsitz (6) mit einem zugeordneten und endseitig der Kolbenstange (5) angeordneten Verschlusskörper (7) umfasst.

2. Pneumatische Steuerventilanordnung nach Anspruch 1,
**dadurch gekennzeichnet, dass** der Überströmkanal (11) in der Kolbenstange (5) als Kolbenstangenüberströmkanal (11) ausgebildet ist und mit dieser verschiebbar ist zwischen der Referenzdruckkammer (9) und einer benachbarten Überströmkammer (12).

3. Pneumatische Steuerventilanordnung nach Anspruch 1,
**dadurch gekennzeichnet, dass** der Überströmkanal (13) als Ventilgehäuseüberströmkanal (13) eine Verbindung zwischen der Überströmkammer (12) und der Steuerdruckkammer (10) herstellt.

4. Pneumatische Steuerventilanordnung nach Anspruch 3,
**dadurch gekennzeichnet, dass** die Überströmkammer (12) gegenüber der Kolbenstange (5) mit einer ersten dynamischen Dichtung (14) seitens der angrenzenden Referenzdruckkammer (9) sowie mit einer zweiten dynamischen Dichtung (15) seitens einer andererseits angrenzenden Entlüftungskammer (16) versehen ist.

5. Pneumatische Steuerventilanordnung nach Anspruch 3 oder 4,
**dadurch gekennzeichnet, dass** der Kolbenstangenüberströmkanal (11) unter Berücksichtigung des Hubwegs des Steuerkolbens (3) und der Lage der ventilgehäuseseitigen Druckkammern derart in der Kolbenstange (5) ausgebildet ist, dass während der Bremsung bei entsprechend absinkendem Steuerdruck zuerst die Überströmverbindung zwischen der Steuerdruckkammer (10) und der Referenzdruckkammer (9) schließt, ehe die Verbindung zwischen dem KDR-Kanal (KDR) und dem Entlüftungsanschluss (Ex) schließt.

6. Pneumatische Steuerventilanordnung nach Anspruch 5,
**dadurch gekennzeichnet, dass** der Kolbenstangenüberströmkanal (11) zwischen der Steuerdruckkammer (10) und der Referenzdruckkammer (9) eine Drosselstelle für einen verzögerten Druckausgleich des Referenzdrucks gegenüber dem voreilenden Steuerdruck bildet.

7. Pneumatische Steuerventilanordnung nach einem der vorstehenden Ansprüche,
**dadurch gekennzeichnet, dass** eine zwischen Abschlussventilgehäuse (2) und Verschlusskörper (7) angeordnete Ventilfeder (8) in Schließrichtung der Sitzventilanordnung wirkt.

8. Pneumatische Steuerventilanordnung nach einem der vorstehenden Ansprüche,
**dadurch gekennzeichnet, dass** die zum Schließen der Abschlussventilanordnung sowie der Überströmungsschließmittel erforderliche Druckdifferenz zwischen Referenzdruck und Steuerdruck durch die Kolbenfläche des Abschlussventilsteuerkolbens (3) sowie der Vorspannung und Federrate der Ventilfeder (8) und der entgegengesetzt hierzu wirkenden Vorspannung und Federrate der Rückstellfeder (4) festlegbar ist.

## Claims

1. A pneumatic control valve assembly for regulating the brake cylinder pressure of an automatic indirect compressed-air brake according to a pressure difference between a control pressure (S) and a reference pressure (A) acting oppositely upon a control piston, wherein means for a closing valve function are provided for the compressed air brake's accelerating device which stop the de-aeration of a KDR channel (KDR), that is provided for additional de-aeration, for terminating the initial acceleration,
**characterized in that** the means for the closing valve function are configured in the form of a separate closing valve (1) having a closing valve housing (2), wherein the separate closing valve (1) comprises two overflow channels (11) and (13) so as to realize a connection between a control pressure chamber (10) containing the control pressure (S) and a reference pressure chamber (9) containing the reference pressure (A), wherein a closing valve control piston (3) cooperating with at least one return spring (4) is arranged within the closing valve housing (2) which can be actuated by the control pressure (S) on the one hand, and the reference pressure (A) on the other, and actuates a seat valve assembly via a piston rod (5) for closing the KDR channel with respect to a de-aeration port (Ex) or a brake cylinder pressure port, wherein the seat valve assembly comprises an associated valve seat (6) having a closing body (7) that is arranged at the end side of the piston rod (5).

2. The pneumatic control valve assembly according to claim 1, **characterized in that** the overflow channel (11) in the piston rod (5) is formed as a piston rod overflow channel (11) and displaceable together with it between the reference pressure chamber (9) and an adjacent overflow chamber (12).

3. The pneumatic control valve assembly according to claim 1, **characterized in that** the overflow channel (13) as a valve housing overflow channel (13) establishes a connection between the overflow chamber (12) and the control pressure chamber (10).

4. The pneumatic control valve assembly according to claim 3, **characterized in that** the overflow chamber (12) opposite the piston rod (5) is provided with a first dynamic seal (14) on the side of the adjacent reference pressure chamber (9), as well as with a second dynamic seal (15) on the side of an otherwise adjacent de-aeration chamber (16).

5. The pneumatic control valve assembly according to claim 3 or 4,
**characterized in that** the piston rod overflow channel (11) is formed such within the piston rod (5) with consideration of the stroke of the control piston (3) and the position of the pressure chambers on the valve housing side that during the deceleration at a correspondingly decreasing control pressure the overflow connection between the control pressure chamber (10) and the reference pressure chamber (9) closes first before the connection between the KDR channel (KDR) and the de-aeration port (Ex) closes.

6. The pneumatic control valve assembly according to claim 5,
**characterized in that** the piston rod overflow channel (11) forms a restriction between the control pressure chamber (10) and the reference pressure chamber (9) for a delayed pressure compensation of the reference pressure with respect to the leading control pressure.

7. The pneumatic control valve assembly according to any one of the preceding claims,
**characterized in that** a valve spring (8) arranged between closing valve housing (2) and closing body (7) acts in the closing direction of the seat valve assembly.

8. The pneumatic control valve assembly according to any one of the preceding claims,
**characterized in that** the pressure difference between the reference pressure and control pressure required for closing the closing valve assembly and the overflow closing means may be defined by the piston surface of the closing valve control piston (3) and the bias and spring rate of the valve spring (8) and the thereto counteracting bias and spring rate of the return spring (4).

## Revendications

1. Agencement de soupape de commande automatique pour réguler la pression de cylindres de frein d'un frein à air comprimé indirect automatique en fonction d'une différence de pression entre une pression (S) de commande et une pression (A) de référence agissant en opposition sur un piston de commande, des moyens pour une fonction de soupape de fermeture étant prévus pour le dispositif d'accélération du frein à air comprimé, moyens qui, pour mettre fin à l'accélération initiale, font cesser la purge d'un canal KDR (KDR) prévu pour une purge supplémentaire,
**caractérisé en ce que** les moyens pour la fonction de soupape de fermeture sont réalisés sous la forme d'une soupape (1) de fermeture distincte ayant un corps (2) de soupape de fermeture, la soupape (1) de fermeture distincte comprenant deux canaux (11) et (13) de dérivation pour réaliser une liaison entre une chambre (10) de pression de commande à la pression (S) de commande et une chambre (9) de pression de référence à la pression (A) de référence, dans lequel il est disposé à l'intérieur du corps (2) de la soupape de fermeture un piston (3) de commande de la soupape de fermeture coopérant avec au moins un ressort (4) de rappel, piston qui peut être actionné d'une part par la pression (S) de commande ainsi que d'autre part par la pression (A) de référence et qui actionne par l'intermédiaire d'une tige (5) de piston un agencement de soupape à siège pour fermer le canal KDR (KDR) par rapport à un raccord (Ex) de purge ou à un raccord de pression de cylindre de frein, l'agencement de soupape à siège comprenant un siège (6) de soupape ayant un obturateur (7) associé et disposé du côté de l'extrémité de la tige (5) du piston.

2. Agencement de soupape de commande pneumatique suivant la revendication 1,
**caractérisé en ce que** le canal (11) de dérivation est constitué dans la tige (5) du piston sous la forme d'un canal (11) de dérivation de tige de piston et peut coulisser avec celui-ci entre la chambre (9) de pression de référence et une chambre (12) de dérivation voisine.

3. Agencement de soupape de commande pneumatique suivant la revendication 1,
**caractérisé en ce que** le conduit (13) de dérivation ménage, sous la forme d'un conduit (13) de dérivation de corps de soupape, une liaison entre la chambre (12) de dérivation et la chambre (10) de pression de commande.

4. Agencement de soupape de commande pneumatique suivant la revendication 3,
**caractérisé en ce que** la chambre (12) de dérivation est pourvue par rapport à la tige (5) du piston d'une première étanchéité (14) dynamique du côté de la chambre (9) de pression de référence voisine ainsi que d'une deuxième étanchéité (15) dynamique du côté d'une chambre (16) de purge voisine de l'autre côté.

5. Agencement de soupape de commande pneumatique suivant la revendication 3 ou 4, **caractérisé en ce que** le canal (11) de dérivation de tige de piston est constitué en tenant compte de la course du piston (3) de commande et de la position de la chambre de pression du côté du corps de la soupape, d'une telle façon dans la tige (5) de piston que pendant le freinage, si la pression de commande s'abaisse d'une manière correspondante, la liaison de dérivation entre la chambre (10) de pression de commande et la chambre (9) de pression de référence se ferme d'abord avant que ne se ferme la liaison entre le canal KDR (KDR) et le raccord (Ex) de purge.

6. Agencement de soupape de commande pneumatique suivant la revendication 5,
**caractérisé en ce que** le conduit (11) de dérivation de tige de piston entre la chambre (10) de pression de commande et la chambre (9) de pression de référence forme un point d'étranglement pour une compensation de pression retardée de la pression de référence par rapport à la pression de commande en avance.

7. Agencement de soupape de commande pneumatique suivant l'une des revendications précédentes,
**caractérisé en ce qu'**un ressort (8) de soupape monté entre le corps (2) de soupape de fermeture et l'obturateur (7) agit dans la direction de fermeture de l'agencement de soupape à siège.

8. Agencement de soupape de commande pneumatique suivant l'une des revendications précédentes,
**caractérisé en ce que** la différence de pression, nécessaire à la fermeture de l'agencement de soupape de fermeture ainsi que du moyen de fermeture de la dérivation entre la pression de référence et la pression de commande, peut être fixée par la surface du piston (3) de commande de la soupape de fermeture ainsi que par la précontrainte et l'élasticité du ressort (4) de rappel.
